# EUROPEAN PATENT APPLICATION

(11) **EP 1 829 782 A2**
(43) Date of publication of application: **05.09.2007**
(21) Application number: 05818061.3
(22) Date of filing: 18.11.2005
(51) Int. Cl.: B64C 1/00, B64C 5/02

(54) **LIFTING-TYPE AEROPLANE FUSELAGE**

(30) Priority: 19.11.2004 RU 2004133827
(71) Applicant: Karklin, Andrey Mikhailovich, Moscow, 119034 (RU); Bogdanov, Sergey Ivanovich, Moscow, 127490 (RU); Kalygina, Galina Vladimirovna, Moscow (RU); Jamgarov, Stepan Grigoryevich, Moscow 105215 (RU)
(72) Inventor: JAMGAROV, Stepan Grigoryevich, Moscow 105215 (RU)
(74) Representative: Benatov, Emil Gabriel
(86) International application number: PCT/RU2005/000579
(87) International publication number: WO 2006/057575

(57) **Abstract**

There is declared an aircraft with a lifting fuselage, comprising a wing, on outboard wing panels of which there are mounted engines, the fuselage width is considerably more than its height, but a front portion of the fuselage in plane smoothly transforms from a narrower nose portion into a wide base portion, therewith, the tail assembly has two stabilizers with control surfaces, the stabilizers are spaced from one another along the fuselage width aside from the longitudinal vertical plane of the aircraft and are installed at angle with respect to it, on each of the stabilizers it is installed an all-movable arrow-type yaw rudder with forming a T-shaped tail assembly, the axis of turn of said yaw rudder is positioned on the stabilizer in the plane of the yaw rudder, but construction planes of the stabilizers intersect with one another in the plane of the aircraft symmetry plane on the base longitudinal axis of the aircraft or below it.

## Description

The present invention relates to lifting vehicles and, in particular, to aircrafts, which are accomplished in the form of passenger version, cargo version or in the form of cargo and passenger variant and which possess of an improved sensitivity upon evolutions in a flight, associated with an operation of aerodynamic airfoils, in particular, with an operation of tail assembly.

There is known an aircraft with an increase lift capacity, which is intended for an airfreight of cargoes within loading gage onto the upper portion of the aircraft fuselage. (See A.A.Bruk, K.G.Udalov, C.G.Smirnov. "Illiustrativnaya encyclopedia samoletov EMZ im. V.M.Myasishteva", Moskva, AVIO PRESS, 1999 g., s.248, Samolet 3 M-T).

In the known project of the mentioned aircraft in order to affectively operate a tail assembly is carried out in the form of stabilizers, which are positioned at angle with respect to a horizontal plane of the aircraft and on which there are oblique installed keels with rudders, which are pivotally mounted. In this particular case such a construction of the tail assembly is selected in order to avoid an influence on it a cargo, which is positioned at the front of large span wing and which is mounted above the fuselage. Alternatively an opacity of the tail assembly did not allow to function its control aerodynamic airfoils effectively and dependably due to airflow breakdowns both upon a carrying out various maneuvers of the aircraft and upon an ordinary cruise flight.

However, in the known aircraft an angle "V" of montage of the stabilizers is selected in such a manner that their construction planes intercept one another in the plane of the aircraft symmetry above its longitudinal axis.

In such a case in order to carry out the aircraft turn the keels, positioned with yaw rudders on the stabilizer, create moments, which lead to the aircraft rolling motion not into the turn side, but into the opposite side. It is necessary to dump these parasite moments by means of other aerodynamic elements, and firstly by means of those ones, which are positioned on a roof. In aircrafts of large airlift the necessity of such compensation leads to serious oversized external dimensions of lateral control surfaces, as it is seen from illustrations, and to great span of wing.

Therewith, the presence on the keels a deflected control surface of small size in comparison with all the area of the keels leads to its inefficient operation upon the aircraft maneuvers.

From US 5769358 it is known an aircraft with lifting fuselage, comprising a fuselage, which has an elliptical cross section and is horizontally extended one, comparatively short wings, on which there are mounted engines and a T-shaped tail assembly with a high-set stabilizer.

In the given aircraft the fuselage adds the wing in a part of creation of lift, and it favorably affects overall the aircraft external dimensions, for example, a possibility of the wing span reduction appears. At the same time in such a construction with the T-shaped tail assembly, having one keel, which is positioned along the aircraft symmetry axis, a number of problems, concerning its efficiency, arises. In particular upon the turn accomplishment, when the yaw rudder, positioned on the keel, is deflected into the turn side (for example, in order to turn to the left the rudder is deflected to the left), on the deflected rudder a force arises, and this force creates a moment with respect to the longitudinal axis of the aircraft, and this moment tends to turn the aircraft around this axis into the side, which is opposite one with respect to necessary side (in our example, upon the turn to the left the force, which arises on the rudder, tends to turn the downward the right outboard wing panel while it is necessary to lift it. In order to compensate the mentioned harmful moment it is necessary to operate (to deflect) horizontal aerodynamic surfaces of the wing and the high-set stabilizer. However, since the wings are short-dimensional ones for an obtainment of a sufficient compensation and reliable controllability it is necessary to have large areas of the mentioned aerodynamic surfaces. Therewith, by virtue of small torsional stiffness of the wing a control reverse is possible one, when instead of the control rolling moment the wing twisting occurs. A wide fuselage upon such maneuver causes an additional complexity in a creation of well controllability. All the described facts lead to a complexity upon a concrete accomplishment of necessary construction and create an element of incertitude upon the control of the given known aircraft.

The closest analogue with respect to the declared invention is the aircraft construction, which is described in RU 2174089 (in the collateral Application Nº PCT/RU00/00542). The aircraft has a lifting fuselage, comparatively short wings, on which there are mounted engines and a T-shaped tail assembly, which in the given case is carried out in the form of two keels, which are installed at angle with respect to the vertical plane of the aircraft symmetry. Along all the rear edge of the fuselage there are also mounted deflected aerodynamic surfaces, which, in particular, act the part of the stabilizers.

Although the mentioned known construction of tail surfaces improves their efficiency upon the aircraft maneuvers, nevertheless the drawbacks, which are above-described ones, in general, are intrinsic ones also to this known project.

The object of the present invention is a creation of the aircraft with the lifting fuselage, which possesses of well and understandable controllability upon the maneuvers, which do not require a serious improvement of the efficiency, and, therefore, of weight and overall dimensions of the wing and rolling controls, and it allows to save all the preferences of the aircraft scheme with the lifting fuselage.

In order to solve the mentioned problem there is declared an aircraft with a lifting fuselage, comprising a wing, on outboard wing panel of which there are mounted engines, the fuselage width is considerably more than its height, but a front portion of the fuselage in plane smoothly transforms from a narrower nose portion into a wide base portion, therewith the tail assembly has two stabilizers with control surfaces, the stabilizers are spaced from one another along the fuselage width aside from the longitudinal vertical plane of the aircraft and are installed at angle with respect to it, each of the stabilizers is provided with an all-movable arrow-type yaw rudder, the axis of turn of which is positioned in the plane of the yaw rudder, which is mounted on the stabilizer end with forming a T-shaped tail assembly, therewith construction planes of the stabilizers intersect with one another in the plane of the aircraft symmetry plane on the base longitudinal axis of the aircraft or below it.

In addition, the mentioned axis of the turn divides the yaw rudder by two portions, which are approximately equal ones with respect their area in order to reduce a hinge moment and to simplify controllability.

Therewith, in one of the aircraft embodiment the angle γ , which is measured between the stabilizer plane and the horizontal plane, is in the range of 10° to 30°.

### Brief Description of Drawings

The present invention will become more understandable one upon an attention turning to the accompanying drawings, wherein:

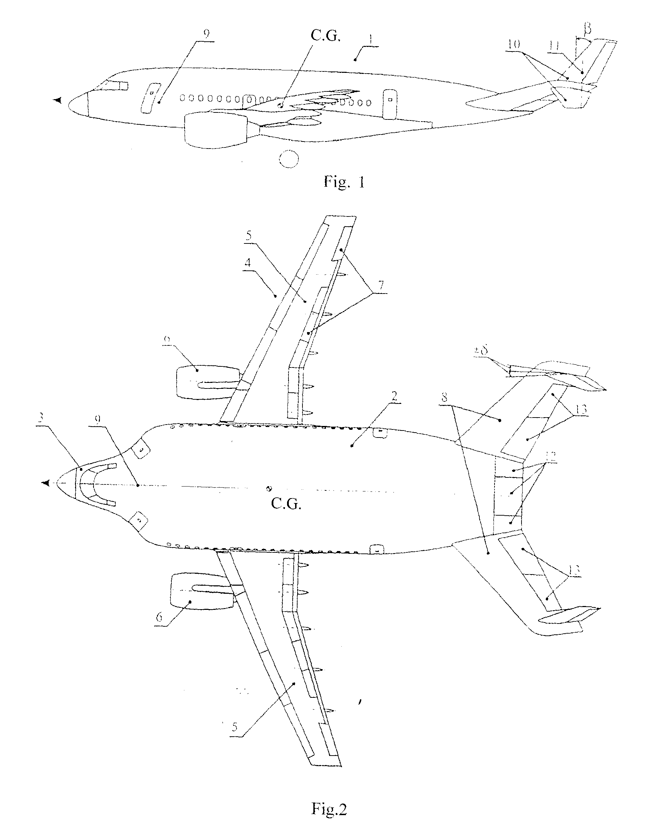

Fig. 1 is a side elevation of the aircraft, which is declared in according to the present invention;

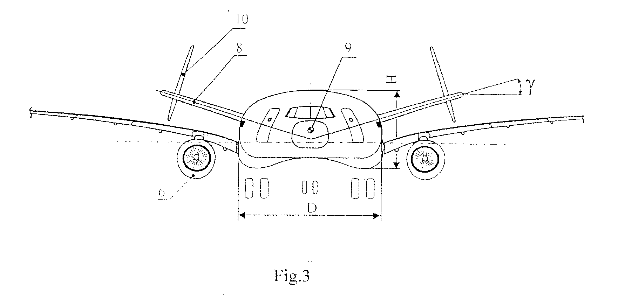

Fig.2 is a plane view of the aircraft, which is shown in Fig. 1;
Fig.3 is a head-on view of the mentioned aircraft.

The aircraft 1, which is declared in accordance with the present invention, comprises the fuselage 2, the width D of which is considerably more than its height H. In plane view of the aircraft the forward fuselage 2 smoothly transforms from the narrower nose portion 3 into a wide base portion, corresponding to the base overall dimension of the fuselage. The fuselage of such a type creates a lift in addition to the wing 4 lift and it may be named as a lifting fuselage. The outboard panels 5 of the wing 4 are accomplished with a comparatively short span, and the engines 6 are mounted on them. The wing 4 is provided with yaw control surfaces 7, which fulfill their ordinary functions upon the aircraft flight. The tail assembly of the aircraft 1 includes two stabilizers 8, which are spaced from one another along the fuselage 2 width with respect to the vertical plane of the aircraft symmetry aside from the longitudinal vertical plane of the aircraft. The angle γ of the installation of the stabilizers 8 with respect to the horizontal is selected in the range of 10° to 30°. The construction planes of the stabilizers intersect with each other in the plane of the aircraft symmetry on the base longitudinal axis of the aircraft or below it.

On the end of each stabilizer 8 it is mounted the all-movable arrow-type yaw rudder 10, forming a separate T-shaped tail assembly. The axis 11 of turn is positioned in the yaw rudder 10 plane and divides it in by two front and rear portions, which have approximately equal areas. A sweep angle β of the front edge of the yaw rudder is more than a sweep angle of the wing and is selected in accordance with a condition, consisting in that M_{crit} of the rudder is more or equal to M_{crit} of the wing. The yaw rudder 10 is mounted in such a manner that it may turn around its neutral position, therewith the turn angle δ is in the range of ± 25°÷30°. The turn axis 11 is disposed at the end of the stabilizer 8. In the fuselage 2 tail section there are accomplished aerodynamic surfaces 12. The turn of each yaw rudder 10 is provided by means of drive mechanism (not shown), which is positioned mainly inside of the stabilizer 8. This mechanism is not the object of the present invention and it may be carried out on the basis of the general state of the art. The stabilizers 8 are provided with control surfaces 13.

A process of flight of the aircraft 1 of the given type and preferences of scheme, used in it, are sufficiently completely described in the above-mentioned description and documents of the known general state of the art. In these documents it is shown, that the usage of the wide lifting fuselage improves weight and overall dimension characteristics of the aircraft and expands its layout capabilities. However, as it was said upon a characterizing of the known documents, the problem of the aircraft controllability upon various maneuvers occurs. This drawback appears especially demonstrable and definitely one upon the aircraft turn.

The present invention effectively solves this topical object and provides with an understandable and reliable controllability upon the aircraft maneuvers, in particular, upon its turn.

It is accomplished by the following way.

Upon the necessity of the aircraft 1 turn, for example, leftward with respect to the flight path the all-movable yaw rudder 10 both on the left and right stabilizers are also leftward deflected (their rear edges go leftward). In the aircraft 1, which is declared in accordance with the present invention, the construction planes of the stabilizers 8 intersect with each other in the plane of the aircraft symmetry or on the base longitudinal axis 9 of the aircraft or below it. Therefore, the aerodynamic force, arising on the deflected yaw rudders 10 either does not create a moment around the longitudinal axis X of the aircraft, or creates a moment on a small arm around the axis X, which leads to the aircraft rolling motion aside the turn, i.e., to the moment, which lifts the right outboard panel 5 of the wing 4. The control surfaces 12 of the left and right stabilizers also may participate in a control of the yaw, deflecting differentially. As a result, the yaw control surfaces on the wing may be substantially reduced.

Thus, there is created an understandable and therefore also effective method of the aircraft control upon maneuvers in flight, leaving without of variation the scheme and overall dimensions of the main elements of the aircraft and, therefore, leaving invariable all the preferences of the given scheme of the aircraft with the lifting fuselage.

The yaw rudders 10 in accordance with the present invention are made of arrow-type in order to reduce a drag upon flights, when Mach numbers approximately equal to 0.8, and these yaw rudders represent by themselves aerodynamically flat surface. Their turn axis position, providing with a division of the rudder by two approximately equal portions with respect to their areas, reduces the hinge moment, which is required for its turn, and facilitates the controllability by means of yaw rudder. A creation of such a construction is not complex one upon the modem development of the aircraft engineering.

## Claims

1. An aircraft with a lifting fuselage, comprising a wing, on outboard wing panels of which there are mounted engines, the fuselage width is considerably more than its height, but a front portion of the fuselage in plane smoothly transforms from a narrower nose portion into a wide base portion, therewith the tail assembly has two stabilizers with control surfaces, the stabilizers are spaced from one another along the fuselage width aside from the longitudinal vertical plane of the aircraft and are installed at angle with respect to it, on each of the stabilizers it is installed an all-movable arrow-type yaw rudder with forming a T-shaped tail assembly, the axis of turn of said yaw rudder is positioned on the stabilizer in the plane of the yaw rudder, but construction planes of the stabilizers intersect with one another in the plane of the aircraft symmetry plane on the base longitudinal axis of the aircraft or below it.

2. An aircraft with a lifting fuselage as set forth in Claim 1, **characterizing in that** the mentioned axis of the turn divides the yaw rudder by two portions, which are approximately equal with respect their area in order to reduce a hinge moment and to simplify a controllability.

3. An aircraft with a lifting fuselage as set forth in Claim 1 or in Claim 2, **characterizing in that** the mentioned axis of the yaw rudder turn is positioned on the end of the stabilizer.

4. An aircraft with a lifting fuselage as set forth in Claim 1, **characterizing in that** the angle γ , which is measured between the stabilizer plane and the horizontal plane, is in the range of 10° to 30°.
